# EUROPEAN PATENT SPECIFICATION

(11) **EP 4 339 499 B1**
(45) Date of publication and mention of the grant of the patent: **03.06.2026**
(21) Application number: 22196172.5
(22) Date of filing: 16.09.2022
(51) Int. Cl.: F16L 57/06, F16J 3/04, H02G 3/04, H02G 3/06

(54) **PROTECTION DEVICE, USE AND METHOD**
SCHUTZVORRICHTUNG, VERWENDUNG UND VERFAHREN
DISPOSITIF DE PROTECTION, UTILISATION ET PROCÉDÉ

(43) Date of publication of application: 20.03.2024
(73) Proprietor: ABB SCHWEIZ AG, 5400 Baden (CH)
(72) Inventor: DJURIC, Aleksandra, 8152 Opfikon (CH); MARKOVIC, Slavko, 8302 Kloten (CH); HUEPPI-ZIEGLER, Roger, 9493 Mauren (LI); ECK, Peter, 8514 Amlikon-Bissegg (CH)
(74) Representative: Maiwald GmbH

(56) References cited:
- DE-A1- 102020 007 493
- DE-A1- 3 201 948
- DE-U1- 202007 012 036
- DE-U1- 9 201 386
- US-B2- 6 761 189

## Description

### FIELD OF THE INVENTION

The present invention relates to a protection device, a use of a half-shell and/or a locking element in a protection device, and a method for assembling such a protection device.

### BACKGROUND OF THE INVENTION

Protection devices for cylindrical bodies, in particular for pipes, hoses, cables, etc., are generally known in the prior art. Such protective devices may be arranged at critical points of such a cylindrical body, e.g. a corrugated hose for cables on machines. Such a machine may be for example a robot and the protection device is used to prevent damages to the hose by chafing or rubbing at such critical points where it may come into contact with moving parts, e.g. a swing arm, an arm or a hand. However, such protection devices may be used in other industrial fields and processes. The protection devices usually consist of two parts that are joined together by separate means, for example, metal screws, clamps clips, etc. Therefore, the assembling of such protection devices may be difficult and time consuming. Furthermore, a subsequent repositioning is only possible with considerable effort. In addition, the separate means, which is mostly made of metal, can damage the machine since they are not made of plastic like the cylindrical body.

From DE 10 2020 007493 A1, a cable protector ring for an energy-supply line on a robot arm is known. The cable protector ring comprises first and second partial shells, wherein the partial shells complement each other when assembled to form a first ring body of the cable protector ring. The ring body has an inner mantle wall which forms a contact surface for an outer jacket wall of the energy-supply line when the cable protector ring is fastened in its mounting position to the line. The first and second partial shells are connected in a form-fitting manner to form the first ring body by separate plastic-joining-plug means. The plastic-joining-plug means penetrate the joined connecting end sections of the first and second partial shells in a locking arrangement, being completely recessed from the outer surface of the cable protector ring, thereby forming the form-fit.

It has now become apparent, that there is a need to provide a better protection device for protecting cylindrical bodies without any metallic parts and which has a lower weight.

In view of the above, it is an object of the present invention to provide a protection device for protecting cylindrical bodies from abrasions and which is easier to assemble. It is in particular an object of the present invention to provide a protection device which allows to be connected to a cylindrical body without any additional means, like screws or clamps.

These and other objects, which become apparent upon reading the following description, are solved by the subject matter of the independent claims. The dependent claims refer to preferred embodiments of the invention.

### SUMMARY OF THE INVENTION

According to the present invention, a protection device for protecting a cylindrical body is provided, according to claim 1.

The protection device comprises:
at least two half-shells configured to be arranged on an external surface of the cylindrical body, wherein the two half-shells each comprise at least one cut-out; and at least one locking element configured to be arranged in the at least one cut-out of each half-shell for connecting the two half-shells and locking the protection device in an assembled state in an axial direction by forming a form-fit with the cylindrical body.

The protection device may be used with a cylindrical body or cylindrical element, like pipes, hoses, cables or similar structures. The cylindrical body may be flexible. Furthermore, the cylindrical body has a corrugated surface. The cylindrical body may also be described as a cylindrical conduit.

The protection device comprises at least three parts. More precisely, the protection device comprises at least two half-shells and at least one locking element. In a preferred embodiment, the protection device may comprise four parts. More precisely, the protection device may comprise two identical half-shells and two identical locking elements.

The half-shells are configured to be arranged on a circumference of the cylindrical body in an assembled/installed state. In other words, the protection device may be adjacent and/or in contact with an outer surface of the cylindrical body. The two half-shells are preferably semi-circular. Other shapes may be possible. The half-shells each comprise at least one cut-out. In an assembled/installed state, the cut-out allows access to an outer surface of the cylindrical body so that the locking element may be arranged.

The at least one locking element connects the two half-shells with each other. For this, the locking element is arranged in the cut-out of each half-shell. The locking element further locks the protection device in an axial direction of the cylindrical body on which the protection device is arranged by forming a form-fit with the external surface of the cylindrical body. Thus, the locking element has two functions. Moreover, the locking element may be interchangeable. This means, that different locking elements can be used with the same half-shells, depending on the surface of the cylindrical body.

The axial direction is the direction orthogonal to the radial direction of the half-shells or the cylindrical body. In other words, the axial direction is to be understood as the longitudinal direction of the cylindrical body.

The protection device according to the present invention allows to be arranged on a designated position on a cylindrical body without additional separate connection means, for example, screws, clamps, clips etc. Furthermore, the assembly and/or disassembly of the protection device according to the present invention is easy and time-saving.

The protection device according to the present invention has therefore a modular feature and may be easily configured for different applications. In addition, with the aid of the design of the protection device and taking into account different possible internal contours of the locking element, which can be exchanged quickly, easily and intuitively, the area of application of the protection device may cover corrugated tubes with different pitches, hoses with smooth surfaces, over-extruded corrugated tubes, cables or components with similar external contours, etc. In other words, with the aid of the protection device, the same basic components (half-shells) are used for each application and specified for the respective application with the aid of the corresponding insert (locking element).

The protection device according to the present invention or protection sleeve includes several technical advantages. The protection device according to the present invention has less volume and therefore less weight than prior art protection devices. Because the present protection device is lighter, the cylindrical body, for example a corrugated tube, is weighed down less, which is important, for example in the field of robotics/automation but also in other industrial fields. The protection device may be designed without any metallic components. This allows the protection device to cushion instead of break in case of a blow or strike. Additionally, the weight of the metal screws is also eliminated, which contributes to an additional weight reduction. Furthermore, a thinner wall thickness is possible, which leads to a further reduction in weight, material savings as well as faster production time. In addition, the protection device according to the present invention has a greater flexibility, which has been proven by laboratory analyses. Increased flexibility delays fracture during use, which is important since many movements and impacts occur in the field, for example during an industrial process. If the component is too stiff, it will break more quickly due to an impact, as no cushioning is possible. The protection device according to the present invention comprises a locking element instead of a screw, and therefore allows a cushioning against impacts.

The locking element is configured to form the form-fit with the cylindrical body which is at least partially corrugated. A corrugated surface is very suitable for a form-fit connection, especially in an axial direction of the cylindrical body. Therefore, this embodiment provides an implementable solution to connect the protection device with such a cylindrical body.

In a preferred embodiment, the half-shells each comprise two cut-outs and the half-shells are connected to each other by at least one locking element, in particular two locking elements, arranged in the cut-outs. The two locking elements provide a form closure and/or force fitting of the two half-shells. It also provides a fixation of the protection device in an axial direction of the cylindrical body.

In an embodiment, the half-shells each comprise at least one connection element at a free end of the half-shells. The free ends are located in a circumferential direction of the half-shells. The connection element provides a means for connecting the two half-shells, so that the half-shells stay in place during the installation. The at least one connection element may help that the two half-shells stay in place until the locking element is arranged in the cut-out and/or the protection device is arranged on its designated position. The connection elements may further provide a means for aligning the half-shells in a correct and easy manner.

In an embodiment, the connection element comprises a dovetail joint and/or a pin-receptacle connection or pin-receptacle centering. The dovetail joint helps to preassemble the two half shells with each other, the half shells hold together by a form fit. The pin-receptacle centers the half shells and prevents the half shells from moving relatively to each other. In a preferred embodiment, the connection element comprises both elements. These two connection means allow a connection between the two half-shells without fixating the two half-shells with the cylindrical body. In other words, the two half-shells may still be moved in an axial direction of the cylindrical body to position the protection device.

In an embodiment, the half-shells are at least partially or completely identical to each other. In another embodiment, the protection device comprises two half shells and two locking elements, wherein the two half shells and the two locking elements are identical to each other. By providing at least partial or completely identical half-shells and/or locking elements, the production costs may be reduced.

In an embodiment, the locking element is connected to the half-shells by a first latching element. The first latching element provides a means for connecting the locking element with the two half-shells by form fit. The first latching element may therefore be provided in the region of the cut-outs of the half-shells. The locking element may preferably be connected with each half-shell by means of the latching mechanism. The latching mechanism provides a connection means without any additional separate means, for example, like screw, clamps, clips, etc.

In an embodiment, the locking element comprises a fastening element for fastening the protection device to the cylindrical body in an assembled state. There may be different possible fastening elements. For example, press-on means, like brackets and jaws, or form- fitting means, like protrusions and undercuts.

In an embodiment, the fastening element comprises ribs that are arranged opposite each other at axial ends of the locking element configured to be arranged in the cut-out of the half-shells in an assembled state. The axial direction of the locking element corresponds with the axial direction of the cylindrical body in an assembled state. In an assembled state, the ribs may protrude towards the cylindrical body. The free ends of the ribs may correspond with an outer surface of the cylindrical body. The ribs extend and interact with the corrugated surface of the cylindrical body so that a form fit in an axial direction may be provided.

In an embodiment, the ribs on one side are spaced by a gap, in particular by a tapered gab. The gap may allow to connect the locking element with the two half-shells in an easier way. In an assembled state, the brace elements of the half shells are arranged in the gap.

In an embodiment, in an assembled state, a slit is formed between the locking element and a half-shell, in particular in the region of the gap. The slit my provide a means to disassemble the locking element and the two half-shells. The slit may be used to accommodate a screwdriver to lift out the locking element. Alternatively, any other tool, which may be suitable, can be used.

In an embodiment, the half-shells each comprise at least a secondary latching connection for connecting the locking element and the half-shells. The secondary latching element allows a pre-assembly of the protection device. For the pre-assembly, the secondary latching connection allows to connect the locking element with the two half-shells, wherein it is still possible to move the protection device in an axial direction of the cylindrical body. The secondary latching connection is a temporary connection, until the protection device is moved into its designated position. When the protection device is in its designated or final position, the locking element can be connected with the two half-shells by the first latching connection by pressing down the locking element.

In an embodiment, the two half shells and the locking element do not comprise any metal parts and are connected without any additional elements, in particular metallic elements like screws or clamps. In other words, the protection device may be made entirely of a plastic material. This allows for less material and a lighter weight. Furthermore, this allows the protection device to cushion strikes and blows without breaking.

By reducing the volume and/or the thickness of the protection device, less material for producing the protection device is needed. Therefore the production costs, material and the weight of the protection element may be reduced.

A further aspect of the present invention is directed to a use of a protection device according to one of the preceding embodiments.

A further aspect of the present disclosure is directed to a method for assembling a protection device according to any one of the preceding embodiments, comprising the following steps:
- providing the two half-shells and the locking element;
- arranging the two half-shells on a cylindrical body and connecting the two half-shells by means of the locking element; or
- connecting the two half-shells by the locking element and sliding the protection device on a cylindrical body.

### BRIEF DESCRIPTION OF THE DRAWINGS

The accompanying drawings, which are included to provide a further understanding of the invention and are incorporated in and constitute a part of this application, illustrate embodiments of the present invention and together with the description serve to explain the principle of the present invention. The drawings show:
- **Figure 1**: a perspective view of a schematic drawing of a half-shell;
- **Figure 2**: a detailed view of the half-shell according to Fig. 1;
- **Figure 3**: a further detailed view of the half-shell according to Fig. 1;
- **Figure 4**: a perspective view of a schematic drawing of a locking element;
- **Figure 5**: a further perspective view of the locking element according to Fig. 4;
- **Figure 6**: a cross view of two half-shells and a locking element during assembling, also called pre-assembly;
- **Figure 7**: a side view of two half-shells and a locking element in an assembled state;
- **Figure 8**: a cross view of two half-shells and a locking element in an assembled state;
- **Figure 9**: a perspective view of two half-shells during assembling;
- **Figure 10**: a perspective view of the two half-shells according to Fig. 9 in a pre-assembled state;
- **Figure 11**: a perspective view of the two half-shells and a locking element in a pre-assembled state;
- **Figure 12**: a perspective view of the two half-shells and a locking element according to Fig. 11 in a pre-assembled state;
- **Figure 13**: a perspective view of the two half-shells and a locking element according to Fig. 12 in an assembled state; and

### DETAILED DESCRIPTION OF THE EMBODIMENTS

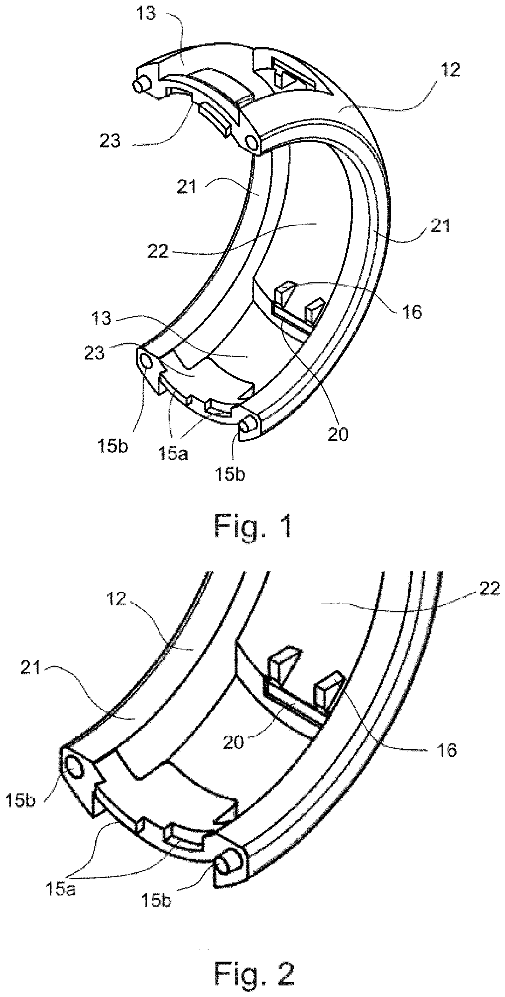

Fig. 1 shows a half-shell 12 of a protection device 10 according to the present invention. The half shell 12 is configured to be arranged at a cylindrical body 11.

The half-shell 12 comprises two web elements 21. The two web elements 21 have a semi-circular geometry and are parallel to each other. The two web elements 21 are connected by a bridge element 22.

The bridge element 22 extends in the circumferential direction of the web elements 21. The bridge element 22 extends between the web elements 21. More precisely, the bridge element 22 is located in a middle area of the two web elements 21 in circumferential direction. The bridge element 22 is flush with the web elements 21 on an outer surface of the half-shell 12. In particular, the complete outer surface of the web elements 21 and the bridge element 22 of the half-shells 12 are flush. The bridge element 22 is not flush with the inner surface of the web elements 21. The bridge element 22 and the web elements 21 form steps on an inner surface of the half-shell 12. In other words, the bridge element 22 does not extend in the complete radial direction of the web elements 21. The inner surface of the web elements 21 is in contract with the outer surface of the cylindrical body 11 in an assembled state.

The outer surface of the web elements 21 and the bridge element 22 of the half-shells 12 are at least partially rounded. More precisely, the web elements 21 and the bridge element 22 have convex geometries. The term convex is to be understood here as being curved or bent away from the central longitudinal axis of the cylindrical body 11 when assembled.

Brace elements 23 are arranged in the areas of the ends in circumferential direction of the web elements 21. Each brace element 23 extends from one web element 21 to the other web element 21 and connects the two web elements 21. The brace elements 23 each have the form of an arched web.

The half-shells 12 comprise two cut-outs 13. The cut-outs 13 are arranged between the brace elements 23, the bridge element 22 and the web elements 21. The cut-outs 13 each have a rectangular shape. Other shapes may be possible.

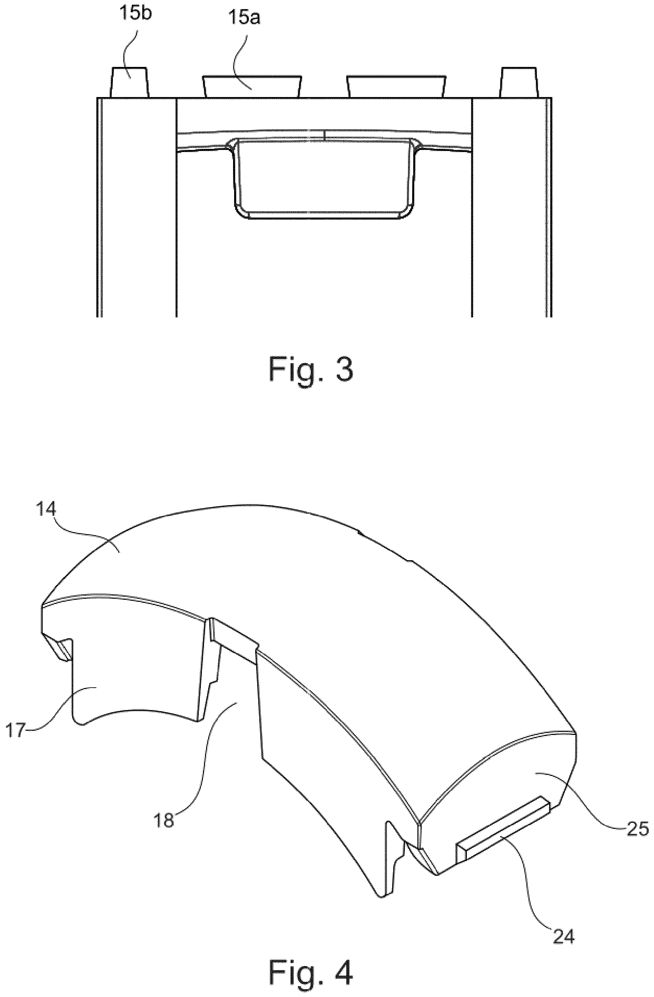

Fig. 2 shows a detailed view of a free end in circumferential direction of the half-shell 12 and the brace element 23. Two connection elements 15 are arranged at the brace element 23. The shown half-shell 12 comprises two different kinds of connection elements 15. The connection elements 15 are further shown in Fig. 3 in more detail. One connection element 15 is a dovetail connection 15a and the other connection element 15 is a pin-receptacle connection 15b or centering. The dovetail connection 15a provides easier assembly, by holding the half shells together by form closure. The pin-receptacle connection 15b or centering prevent an unwanted movement of the half shells, for example in axial direction. By combing these two kinds of connection elements 15, a better and more secure connection between two half-shells 12 during the assembling/installation may be possible. Furthermore, the two half-shells 12 cannot move relatively to each other.

It is also shown in Fig. 1 and Fig. 2 that a first latching element 16 and a secondary latching element 20 are located at each of the ends in circumferential direction of the bridge elements 22.

The first latching element 16 comprises two protrusions on an inner surface of the bridge element 22. The two protrusions are equally spaced from the web elements 21.

The secondary latching element 20 comprises a recess in the front side of the bridge element 22 in circumferential direction. Therefore, the secondary latching elements 20 are closer to the outer surface of the locking element 14 in an assembled state. It is possible, that the protection device 10 may only comprise the first latching elements 16.

The first and secondary latching elements 16, 20 interact with a corresponding latching element 24 on a locking element 14.

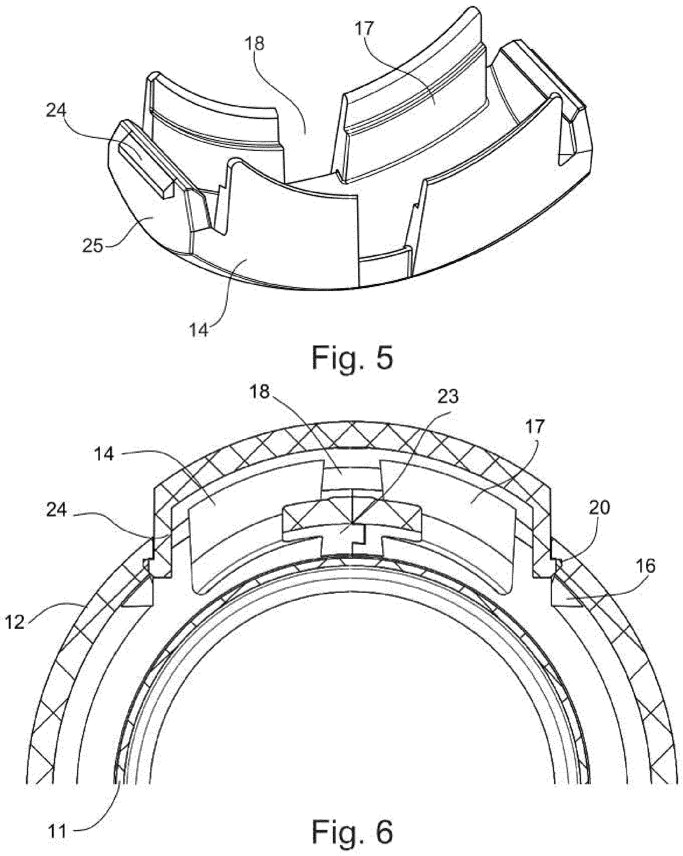

The locking element 14 is shown in detail in Fig. 4 and Fig. 5. The locking element 14 has an arched form. The locking element 14 further has a convex wall or surface, in particular the outer and inner surface is bend outwards, in particular away from a longitudinal axis of the protection device 10, in an assembled state.

The locking element 14 comprises ribs 17. The ribs 17 are arranged at the axial ends of the locking element 14. More precisely, the locking element 14 comprises two ribs 17 on each axial end. The axial direction is the direction orthogonal to the radius of the semi-circular half-shells 12. The ribs 17 protrude away from the convex wall towards the cylindrical body 11 in an assembled state. The geometry of the free ends of the ribs 17 correspond to the cylindrical body 11. The ribs 17 are configured to interact with a corrugated surface of the cylindrical body 11 to allow a form fit in axial direction of the cylindrical body 11.

The ribs 17 are an embodiment of fastening elements of the protection device 10. Alternatively, other locking elements 14 with different fastening elements configured for different cylindrical bodies, for example, smooth or structured cylindrical bodies 11, may be provided.

In addition, the ribs 17 are not distributed over 360°, but over ~40° on two snaps. This means in total 80°, by this reduction, it is possible for the half-shell 12 to cushion instead of break in case of a blow or strike. This was proven by means of impact tests.

A gap 18 is located between the two ribs 17, which are located on the same axial end. More precisely, the gap 18 is positioned in the middle of the locking element 14 in circumferential direction. The gap 18 is tapered but may have any other suitable shape. In an assembled state, two brace elements 23 of two different half-shells 12 are connected with each other by the connection elements 15. When arranging the locking element 14, the connected brace elements 23 are inserted or slid into the gap 18 of the locking element 14.

The locking element 14 comprises a tongue 25 on each free end in circumferential direction. The tongues 25 extend along the free ends of the locking element 14 in a direction parallel to the longitudinal axis of the cylindrical body 11 in an assembled state. Here, the tongues 25 extend along the complete length of the free ends. Other embodiments may be possible. The tongues 25 extend into the same direction as the ribs 17. In other words, the tongues 25 extend/protrude towards the cylindrical body in an assembled state.

The tongues 25 of the locking element 14 comprise each a corresponding latching element 24. The corresponding latching element 24 is arranged at an outer surface of the tongues 25. The outer surfaces face into the circumferential direction of the locking element 14. The corresponding latching element 24 is formed as an edge, which protrudes away from the tongue 25. Alternatively, other suitable forms may be possible.

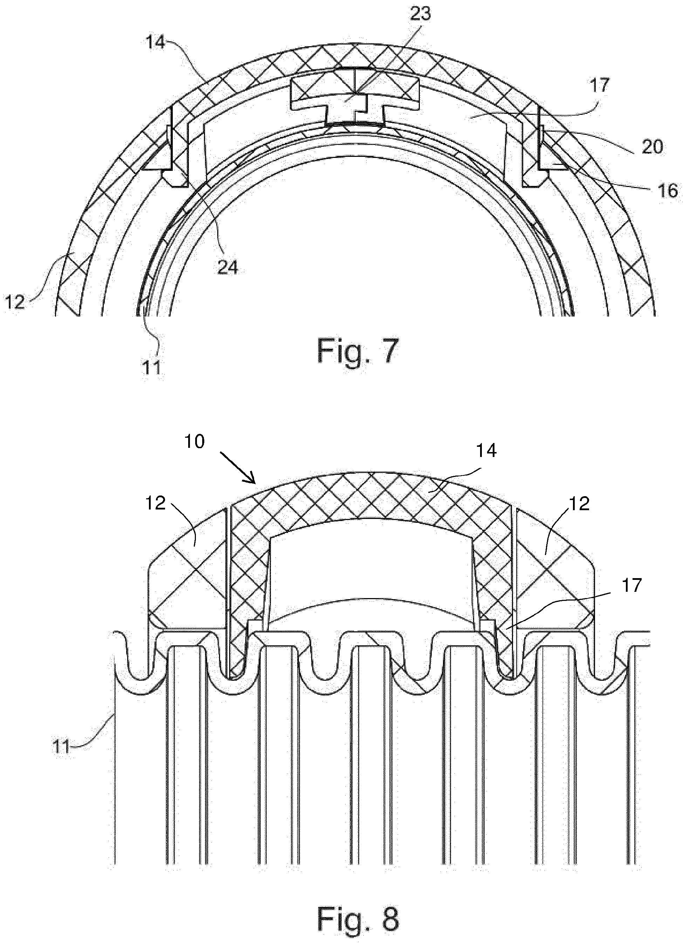

The corresponding latching element 24 is designed to interact with the first latching element 16 and the secondary latching element 20. For example, during the assembling of the protection device 10, the locking element 14 may be connected to the half-shells 12, by connecting first the secondary latching element 20 with the corresponding latching element 24 (see Fig. 6). In this state, the two half-shells 12 and the locking element 14 may be connected with each other, but not locked or fixated in an axial direction of the cylindrical body. Therefore, the protection device 10 may still be moved in said direction to be positioned in its designated position on the cylindrical body. Then, the locking element 14 may be connected by the first latching element 16 and the corresponding latching element 24 (see Fig. 7).

Fig. 8 shows a cross view of the protection device 10 in an assembled state. It shows that the ribs 17 are positioned in a groove of the corrugated surface of the cylindrical body 11.

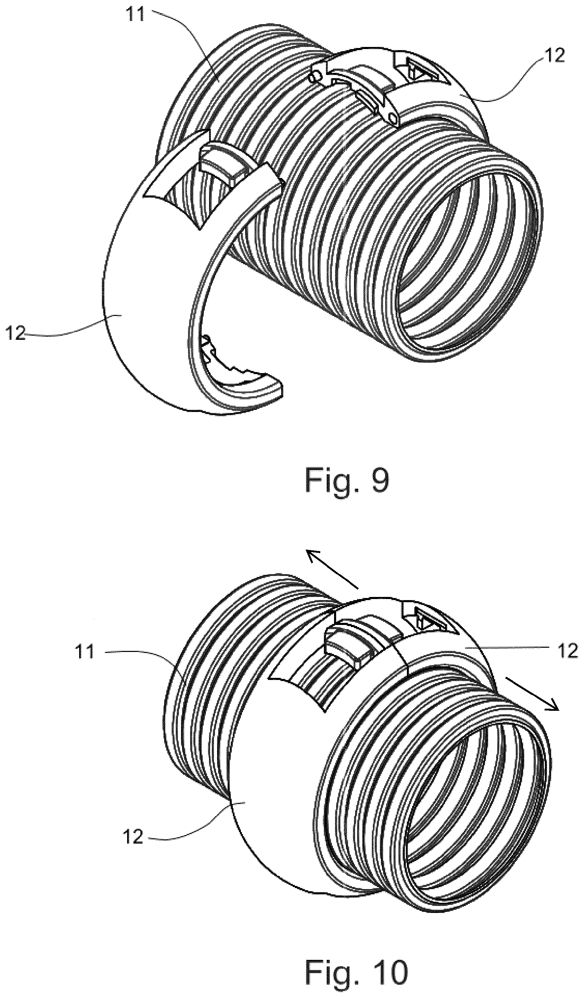

Fig. 9 to Fig. 13 show how a protection device 10 may be assembled and placed on a cylindrical body 11.

In Fig. 9 and Fig. 10, the provided half-shells 12 are centered and joined together by means of the connection elements 15. Next, the locking element 14 may be inserted into the cut-outs 13. First, the locking element 14 may be connected by means of the secondary latching element 20 such that the protection device 10 may still be moved in an axial direction of the cylindrical body 11.

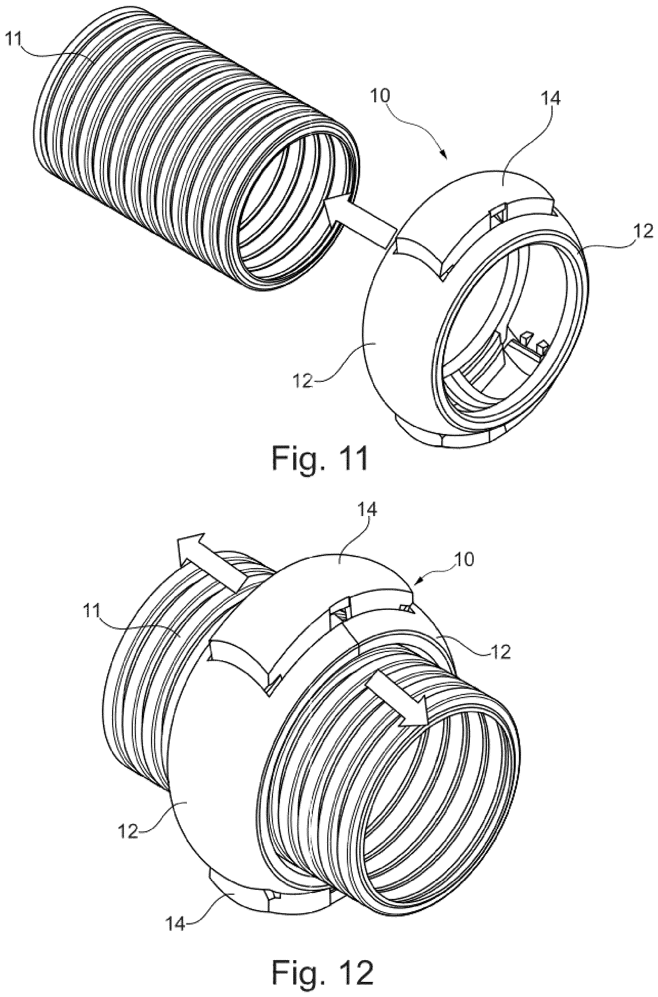

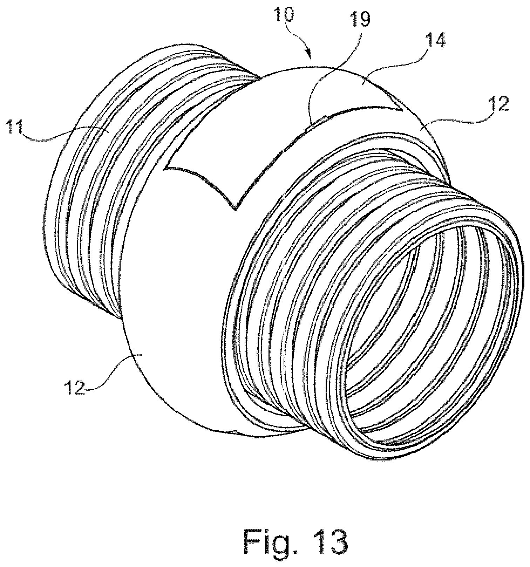

Alternatively, the protection device 10 may be pre-assembled (see Fig. 11). In the pre-assembled state, the locking element 14 is connected to the half-shells 12 by means of the secondary latching element 20. In this pre-assembled state, the protection device 10 can be slid on the cylindrical body 11 (see Fig. 12). Then, the protection device 10 may be moved to its designated position. The designated position may be a position where damage of the cylindrical body is highly likely, for example, by abrasion. Then, the locking element 14 may be moved into its locking position. The locking element 14 may be moved into its locking position by pushing so that the first latching element 16 interacts with the corresponding latching element 24 and the ribs 17 form a form fitting with the corrugated surface of the cylindrical body 11 (see Fig. 13).

In Fig. 13, a slit 19 can be seen on the outer surface of the protection device 10 in the region of the gap 18 (see Fig. 6) of the locking element 14. The slit 19 is designed for disassembling the protection device 10, for example with a screwdriver or a hook.

The invention and design of the protection device 10 or protection sleeve allows quick and easy fixation and repositioning of said protection device without using any additional metallic or metal-like materials. The protection device 10 may be adapted for different cylindrical bodies 11, in particular by switching out the locking element 14. In other words, the locking element 14 may comprise a different inner geometry or surface, depending on the intended use.

Any disclosure and embodiments described herein relate to the protection device and the method, lined out above or below and vice versa. The benefits provided by any of the embodiments and examples equally apply to all other embodiments and examples and vice versa.

It shall be noted that all embodiments of the present invention concerning the method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCES

- 10: protection device
- 11: cylindrical body
- 12: half-shell
- 13: cut-out
- 14: locking element
- 15: connection element
- 15a: dovetail joint
- 15b: pin-receptacle connection
- 16: first latching element
- 17: rib
- 18: gap
- 19: slit
- 20: secondary latching element
- 21: web element
- 22: bridge element
- 23: brace element
- 24: corresponding latching element
- 25: tongue

## Claims

1. Protection device for protecting a cylindrical body (11), wherein the cylindrical body (11) is at least partially corrugated, comprising:
- at least two half-shells (12) configured to be arranged on an external surface of the cylindrical body (11), wherein the two half-shells (12) each comprise at least one cut-out (13); and
- at least one locking element (14) configured to be arranged in the at least one cut-out (13) of each half-shell (12) for connecting the two half-shells (12) and locking the protection device (10) in an assembled state in an axial direction by forming a form-fit with the cylindrical body (11), such that the locking element (14) is configured to form the form-fit with the cylindrical body (11).

2. Protection device according to claim 1,
**characterised in that**
the half-shells (12) each comprise two cut-outs (13) and the half-shells (12) are connected to each other by at least one locking element, in particular two locking elements (14), arranged in the cut-outs (13).

3. Protection device according to one of the preceding claims,
**characterised in that**
the half-shells (12) each comprise at least one connection element (15) located at a free end of the half-shells (12).

4. Protection device according to claim 3,
**characterised in that**
the connection element (15) comprises a dovetail joint (15a) and/or a pin-receptacle connection (15b).

5. Protection device according to one of the preceding claims,
**characterised in that**
the half-shells (12) are at least partially or completely identical to each other.

6. Protection device according to one of the preceding claims,
**characterised in that**
the locking element (14) is connected to the half-shells (12) by a first latching element (16).

7. Protection device according to one of the preceding claims,
**characterised in that**
the locking element (14) comprises a fastening element for fastening the protection device to the cylindrical body (11) in an assembled state.

8. Protection device according to claim 7,
**characterised in that**
the fastening element comprises ribs (17) that are arranged opposite each other at axial ends of the locking element (14) configured to be arranged in the cut-out (13) of the half-shells (12) in an assembled state.

9. Protection device according to claim 8,
**characterised in that**
in an assembled state, at least one slit (19) is formed between the locking element (14) and a half-shell (12) for disassembling the protection device (10).

10. Protection device according to claim 6 to 9,
**characterised in that**
the half-shells (12) each comprise at least a secondary latching element (20) for preassembling the locking element (14) and the half-shells (12).

11. Protection device according to one of the preceding claims,
**characterised in that**
the two half shells (12) and the at least one locking element (14) do not comprise any metal parts and are connected without any additional elements, in particular metallic elements like screws or clamps.

12. Use of a protection device according to any one of the preceding claims.

13. Method for assembling a protection device (10) according to any of the claims 1 to 11, comprising the following steps:
- providing the two half-shells (12) and the at least one locking element (14)
- arranging the two half-shells (12) on a cylindrical body (11) and connecting the two half-shells (12) by means of the locking element (14); or
- connecting the two half-shells by the locking element (14) and sliding the protection device on a cylindrical body (11).

## Patentansprüche

1. Schutzvorrichtung zum Schützen eines zylindrischen Körpers (11), wobei der zylindrische Körper (11) zumindest teilweise gewellt ist, umfassend:
- mindestens zwei Halbschalen (12), die dazu ausgebildet sind, auf einer Außenfläche des zylindrischen Körpers (11) angeordnet zu werden, wobei die beiden Halbschalen (12) jeweils mindestens eine Ausnehmung (13) umfassen; und
- mindestens ein Verriegelungselement (14), das dazu ausgebildet ist, in der mindestens einen Ausnehmung (13) jeder Halbschale (12) angeordnet zu werden, um die beiden Halbschalen (12) zu verbinden und die Schutzvorrichtung (10) in einem montierten Zustand in einer axialen Richtung durch Ausbildung eines Formschlusses mit dem zylindrischen Körper (11) zu verriegeln, so dass das Verriegelungselement (14) dazu ausgebildet ist, den Formschluss mit dem zylindrischen Körper (11) auszubilden.

2. Schutzvorrichtung nach Anspruch 1,
**dadurch gekennzeichnet, dass**
die Halbschalen (12) jeweils zwei Ausnehmungen (13) umfassen und die Halbschalen (12) durch mindestens ein Verriegelungselement, insbesondere zwei Verriegelungselemente (14), die in den Ausnehmungen (13) angeordnet sind, miteinander verbunden sind.

3. Schutzvorrichtung nach einem der vorhergehenden Ansprüche,
**dadurch gekennzeichnet, dass**
die Halbschalen (12) jeweils mindestens ein Verbindungselement (15) umfassen, das an einem freien Ende der Halbschalen (12) angeordnet ist.

4. Schutzvorrichtung nach Anspruch 3,
**dadurch gekennzeichnet, dass**
das Verbindungselement (15) eine Schwalbenschwanzverbindung (15a) und/oder eine Zapfen-Aufnahme-Verbindung (15b) umfasst.

5. Schutzvorrichtung nach einem der vorhergehenden Ansprüche,
**dadurch gekennzeichnet, dass**
die Halbschalen (12) zumindest teilweise oder vollständig identisch zueinander sind.

6. Schutzvorrichtung nach einem der vorhergehenden Ansprüche,
**dadurch gekennzeichnet, dass**
das Verriegelungselement (14) durch ein erstes Rastelement (16) mit den Halbschalen (12) verbunden ist.

7. Schutzvorrichtung nach einem der vorhergehenden Ansprüche,
**dadurch gekennzeichnet, dass**
das Verriegelungselement (14) ein Befestigungselement zum Befestigen der Schutzvorrichtung an dem zylindrischen Körper (11) in einem montierten Zustand umfasst.

8. Schutzvorrichtung nach Anspruch 7,
**dadurch gekennzeichnet, dass**
das Befestigungselement Rippen (17) umfasst, die an axialen Enden des Verriegelungselements (14) einander gegenüberliegend angeordnet sind und dazu ausgebildet sind, in einem montierten Zustand in der Ausnehmung (13) der Halbschalen (12) angeordnet zu werden.

9. Schutzvorrichtung nach Anspruch 8,
**dadurch gekennzeichnet, dass**
in einem montierten Zustand mindestens ein Schlitz (19) zwischen dem Verriegelungselement (14) und einer Halbschale (12) zum Demontieren der Schutzvorrichtung (10) ausgebildet ist.

10. Schutzvorrichtung nach Anspruch 7 bis 9,
**dadurch gekennzeichnet, dass**
die Halbschalen (12) jeweils mindestens ein sekundäres Rastelement (20) zum Vormontieren des Verriegelungselements (14) und der Halbschalen (12) umfassen.

11. Schutzvorrichtung nach einem der vorhergehenden Ansprüche,
**dadurch gekennzeichnet, dass**
die beiden Halbschalen (12) und das mindestens eine Verriegelungselement (14) keine Metallteile umfassen und ohne jegliche zusätzliche Elemente, insbesondere metallische Elemente wie Schrauben oder Klammern, verbunden sind.

12. Verwendung einer Schutzvorrichtung nach einem der vorhergehenden Ansprüche.

13. Verfahren zum Zusammenbauen einer Schutzvorrichtung (10) nach einem der Ansprüche 1 bis 11, umfassend die folgenden Schritte:
- Bereitstellen der beiden Halbschalen (12) und des mindestens einen Verriegelungselements (14);
- Anordnen der beiden Halbschalen (12) auf einem zylindrischen Körper (11) und Verbinden der beiden Halbschalen (12) mittels des Verriegelungselements (14); oder
- Verbinden der beiden Halbschalen durch das Verriegelungselement (14) und Aufschieben der Schutzvorrichtung auf einen zylindrischen Körper (11).

## Revendications

1. Dispositif de protection pour protéger un corps cylindrique (11), dans lequel le corps cylindrique (11) est au moins partiellement ondulé, comprenant :
- au moins deux demi-coques (12) configurées pour être agencées sur une surface externe du corps cylindrique (11), dans lequel les deux demi-coques (12) comprennent chacune au moins une découpe (13) ; et
- au moins un élément de verrouillage (14) configuré pour être agencé dans l'au moins une découpe (13) de chaque demi-coque (12) pour raccorder les deux demi-coques (12) et verrouiller le dispositif de protection (10) dans un état assemblé dans une direction axiale en formant une complémentarité de forme avec le corps cylindrique (11), de manière telle que l'élément de verrouillage (14) est configuré pour former la complémentarité de forme avec le corps cylindrique (11).

2. Dispositif de protection selon la revendication 1, **caractérisé en ce que**
les demi-coques (12) comprennent chacune deux découpes (13) et les demi-coques (12) sont raccordées l'une à l'autre par au moins un élément de verrouillage, en particulier deux éléments de verrouillage (14), agencés dans les découpes (13).

3. Dispositif de protection selon l'une des revendications précédentes,
**caractérisé en ce que**
les demi-coques (12) comprennent chacune au moins un élément de raccordement (15) situé à une extrémité libre des demi-coques (12).

4. Dispositif de protection selon la revendication 3, **caractérisé en ce que**
l'élément de raccordement (15) comprend un joint en queue d'aronde (15a) et/ou un raccordement goupilleréceptacle (15b).

5. Dispositif de protection selon l'une des revendications précédentes,
**caractérisé en ce que**
les demi-coques (12) sont au moins partiellement ou complètement identiques l'une à l'autre.

6. Dispositif de protection selon l'une des revendications précédentes,
**caractérisé en ce que**
l'élément de verrouillage (14) est raccordé aux demi-coques (12) par un premier élément d'enclenchement (16).

7. Dispositif de protection selon l'une des revendications précédentes,
**caractérisé en ce que**
l'élément de verrouillage (14) comprend un élément de fixation destiné à fixer le dispositif de protection au corps cylindrique (11) dans un état assemblé.

8. Dispositif de protection selon la revendication 7, **caractérisé en ce que**
l'élément de fixation comprend des nervures (17) qui sont agencées les unes en face des autres à des extrémités axiales de l'élément de verrouillage (14) configuré pour être agencé dans la découpe (13) des demi-coques (12) dans un état assemblé.

9. Dispositif de protection selon la revendication 8, **caractérisé en ce que**
dans un état assemblé, au moins une fente (19) est formée entre l'élément de verrouillage (14) et une demi-coque (12) pour désassembler le dispositif de protection (10).

10. Dispositif de protection selon la revendication 6 à 9,
**caractérisé en ce que**
les demi-coques (12) comprennent chacune au moins un élément d'enclenchement secondaire (20) pour préassembler l'élément de verrouillage (14) et les demi-coques (12).

11. Dispositif de protection selon l'une des revendications précédentes,
**caractérisé en ce que**
les deux demi-coques (12) et l'au moins un élément de verrouillage (14) ne comprennent aucune partie métallique et sont raccordés sans aucun élément supplémentaire, en particulier élément métallique comme une vis ou une pièce de serrage.

12. Utilisation d'un dispositif de protection selon l'une quelconque des revendications précédentes.

13. Procédé pour assembler un dispositif de protection (10) selon de quelconques des revendications 1 à 11, comprenant les étapes suivantes :
- la fourniture des deux demi-coques (12) et de l'au moins un élément de verrouillage (14) ;
- l'agencement des deux demi-coques (12) sur un corps cylindrique (11) et le raccordement des deux demi-coques (12) au moyen de l'élément de verrouillage (14) ; ou
- le raccordement des deux demi-coques par l'élément de verrouillage (14) et le coulissement du dispositif de protection sur un corps cylindrique (11).
